# EUROPEAN PATENT SPECIFICATION

(11) **EP 0 583 913 B1**
(45) Date of publication and mention of the grant of the patent: **28.10.1998**
(21) Application number: 93306138.4
(22) Date of filing: 03.08.1993
(51) Int. Cl.: F16L 55/46, E21B 23/08, E21B 33/076, B08B 9/06

(54) **Interconnection system of two lines to allow running of pigs, and method of running a pig through this interconnection system**
Verbindungsanordnung von zwei Rohren zur Verwendung von Rohrmolchen, und Verfahren zum Durchfahren eines Rohrmolches in dieser Verbindungsanordnung
Système de raccordement de deux tuyaux pour permettre l'utilisation de racleurs, et circulation d'un racleur dans ce système de raccordement.

(30) Priority: 03.08.1992 BR 9203009; 26.04.1993 BR 9203009
(43) Date of publication of application: 23.02.1994
(73) Proprietor: PETROLEO BRASILEIRO S.A. - PETROBRAS, Rio de Janeiro (BR)
(72) Inventor: Da Silva, José Eduardo Mendonça, Bandeirantes 22795-270, Rio de Janeiro (BR); Lino, Antônio Carlos Ferreira, Rio de Janeiro (BR); Machado Filho, Zephyrino Lavenere, Rio de Janeiro (BR); Teixeira, Marcelo José Barbosa, Rio de Janeiro (BR)
(74) Representative: Barlow, Roy James

(56) References cited:
- GB-A- 2 166 513
- US-A- 3 422 895
- US-A- 3 428 489
- US-A- 3 637 012
- US-A- 3 682 186
- US-A- 4 528 041

## Description

The present invention relates to a pipeline system and to a method of pigging a pipeline system, in which a travelling device known as a "pig" is able to pass through a flowline of a product that can form deposits on the walls said flowline and can cause clogging or other problems, such as a loss of flow load capacity.

More specifically, the invention relates to equipment which can be installed at any intermediate point of a product flowline system and enable a pig introduced into an opening of one of the lines, referred to as an "inlet connection", to run through the line to a point where, under the effect of a control valve specially located at a return curve on the equipment provided by the invention, the pig can return through a different line which is to be cleared, and can then be withdrawn through an opening referred to as an "outlet connection", after removal through the same opening of the material dragged along by the pig.

The line cleaning device known as a pig is a body usually made of a polymeric elastomer (although it can be made of other, less appropriate materials, including metal) and having a widely-varying shape, usually cylindrical (it can also be spherical), or comprise several flexible discs connected by a flexible plastic, or articulated metal, shaft which may or may not be provided with intercalated abrasive members. Such a device is inserted into the pipe and then fluid pressure (gas or liquid) is applied to drive the pig intensively in its travel inside the piping so that it drags to the end of the pipe (or to an intermediate point for removal) the undesirable material deposited on the internal walls of the pipe.

On deep-water well oil flowlines leading to certain points on the surface (such as to a platform), when an obstruction is formed by the accumulation of materials such as "paraffin", there is no physical possibility of sending along a cleaning pig and recovering it because the "final" portion of the piping is in deep waters. In cases where such a cleaning is imperative, a common solution in the art has been to remove the pipe (with a lot of work and at a great cost) to the surface and to replace it with a new one, and the obstructed piping can then be cleaned on the surface by convenient methods, including the use of pigs made of polymeric material.

To overcome this obstacle, there has been developed in the prior art, among other concepts not relevant for understanding the present invention, the pig passing concept referred to as a "pigging loop". However, within this concept current practice only provides for the connection of two lines having the same diameter incorporated into the design of an undersea equipment close to an oil-producing well (e.g. a Christmas tree or a template manifold) so that a pig can be sent out through one of them and returned through the other. With this design option, the production line has, compulsorily and permanently, had the same diameter as the water and/or gas injection line (or as a secondary production line or also as an additional service line).

Although progress has been made to facilitate pig operations in pipes having portions that are difficult to reach, such as the offshore oil production piping described above, there remains the drawback of poor operational flexibility for definitive modifications are required to the internal design of said undersea equipment (e.g. a Christmas tree or a template manifold) and lines are required to have the same diameter for the pig circulation, even in those cases where such a pig is not necessary in view of the inherent characteristics of the fluid being carried, thus causing a significant, and above all unnecessary, increase in the costs of offshore oil-producing systems. It cannot furthermore be used on already existing systems when the undesirable deposit formation appears late in the undersea pipe, for it would force the full replacement of the whole producing system, including the fixed production equipment, causing serious losses.

In order to tackle such problems practically and economically, the invention described herein provides equipment especially designed to be inserted in a portion of the pipe to enable a pig to be launched through a line of an existing system and to cause said pig to return through another line (usually but not necessarily parallel to the line where the pig was launched), which is the line where undesirable material accumulates, and through which the pig travels pushing undesirable deposits to a point on the surface from where said deposits can be removed and the pig then recovered.

GB-A-2166513 discloses an arrangement in which two pipes are bridged by a tubular portion which can be isolated from the two pipes and removed for inspection or maintenance purposes. GB-A-2166513 refers to the possibility of providing local scraper stations near the tubular portion.

The pipeline system of the present invention is characterized by the features of claim 1.

The method of the present invention is characterised by the features of claim 2.

In order that the present invention may more readily be understood the following description is given, merely by way of example, with reference to the accompanying drawings, in which:-
FIGURE 1 is a schematic and general view of the location of the equipment of the present invention in relation to the platform on the surface and to a production well (represented by a wellhead, including a wet Christmas tree);
FIGURE 2 is a close-up view, in perspective, of the undersea connection equipment shown in Figure 1;
FIGURE 3 is a schematic view seen from above of equipment of the invention mounted on well production and operation lines;
FIGURE 4 shows a simplified diagram of the ratio of nominal diameters of the lines involved in production, without the use of the equipment of the invention; and
FIGURE 5 shows the equipment of the invention mounted at an intermediate point on the line, showing the variation in the piping diameters.

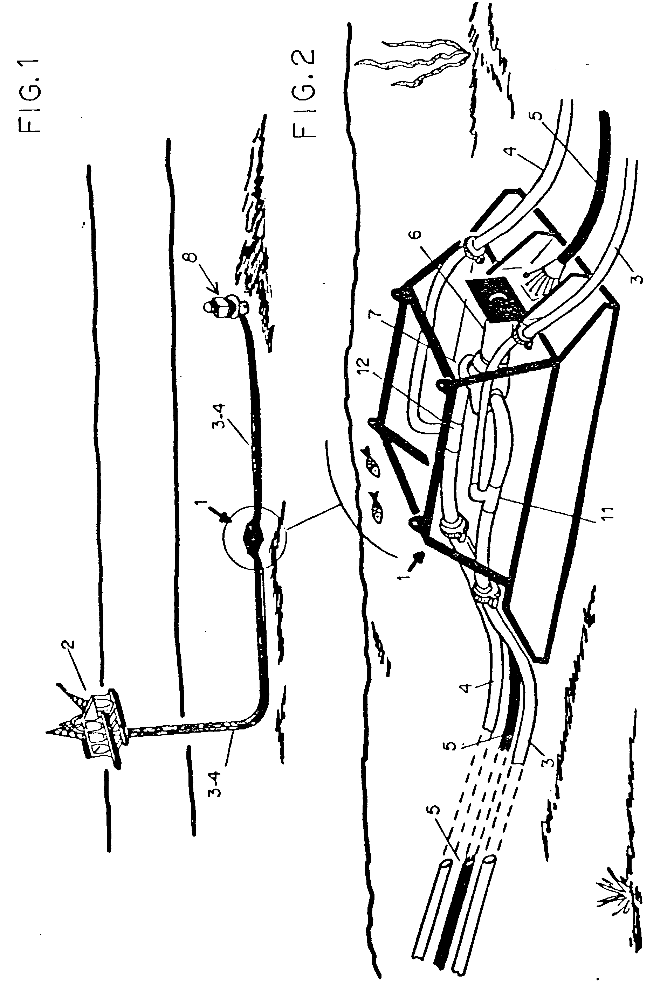

With reference to Figure 1, we see that the equipment 1, which is the subject of the present invention, can be located at an intermediate point between an oil collection centre (for example, surface platform 2) and the satellite wellhead 8 (including the Christmas tree). The lines making this connection are shown here as a single-line member, for purposes of simplification, although two parallel lines can be seen in a careful observation, for we know that at least two pipes should be provided, preferably but not necessarily parallel to one another, said pipes being designated 3 and 4 (see Figure 2 which also shows the umbilicals 5 for carrying hydraulic fluid for the control of the valves of the equipment and the Christmas tree).

Figure 2 shows a close-up view of the equipment supported on the sea bottom, with the arrangement of the pipes and the various components clearly visible. Here the device supporting the equipment is shown without too many constructive features, the purpose being to provide a more realistic view so no greater descriptive attention need be given to such component.

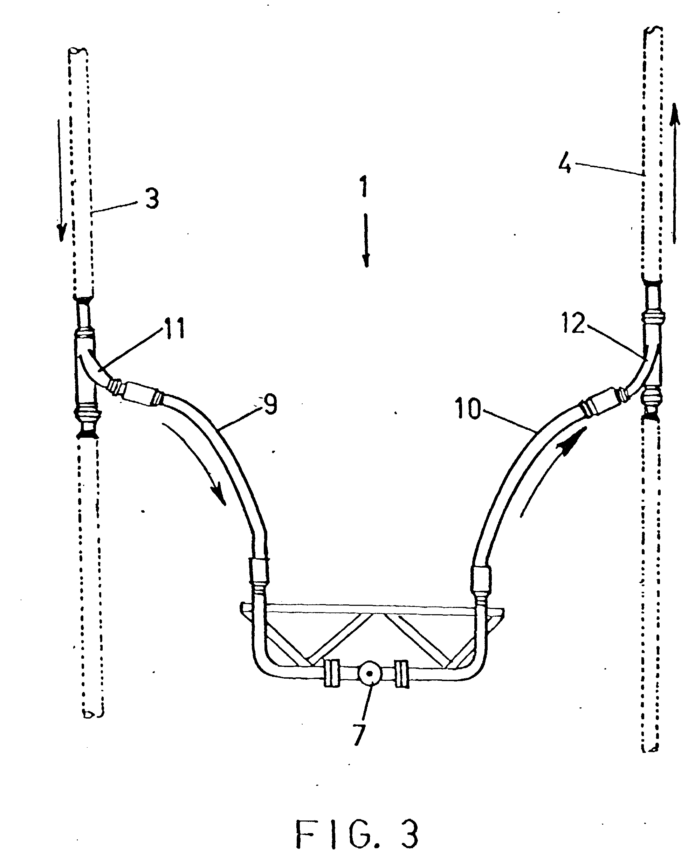

A more detailed look at Figure 3 enables a clearer understanding of the functioning of the equipment to be appreciated. In Figure 3, line 3 carries the auxiliary fluid for injection into the well, and line 4 carries the product oil being sent to the surface. By way of an example only, there is an arrow placed at the side of the pipes to indicate the direction of movement of a pig in an operation for removing undesirable deposits. The two lines 3 and 4 can be seen to be parallel to one another, which is actually preferable because it is more convenient for launching purposes. However, they need not be parallel to one another. This very important operational aspect (parallelism) does not, however, restrict the scope of the present invention, and it is presented here only for the sake of making visualization easier.

Connections 11 and 12, shown in Figure 3 and also in perspective in Figure 2, show how lines 9 and 10 are connected to the lines 3 and 4, these lines 9 and 10 being, respectively, the inlet and outlet curves of the equipment 1 itself. Thus it can be seen that, with valve 7 open which is provided for by a remotely-controlled direct actuation member 6, the pig is allowed to pass from line 3 to line 4 after entering curved branch 9 of equipment 1, and then passing successively through valve 7, curved branch 10 and connection 12. The signal transmission devices for actuating the opening and closing member of valve 7 are not shown in Figure 3, because they are common items in an automatic control technique, although an umbilical conductor 5 is visible in Figure 2.

Suppose that the assembly comprising line 4 and connection 12 carries product oil from the well to the surface, while the assembly consisting of line 3 and connection 11 carries the fluid from the surface to the well.

It is also important to note that generally the equipment 1 is in practice attached to an intermediate point of the well service pipes. However, if the equipment 1 is supported on the sea bottom, a support lattice may be provided for it, not only to impart shape stability to it but also to ensure equal spacing from the two lines. This also makes it easy to move the whole assembly, including equipment 1, as shown in Figures 2 and 3. However, the construction of this lattice is not essential to the present invention and for this reason it is not described in detail.

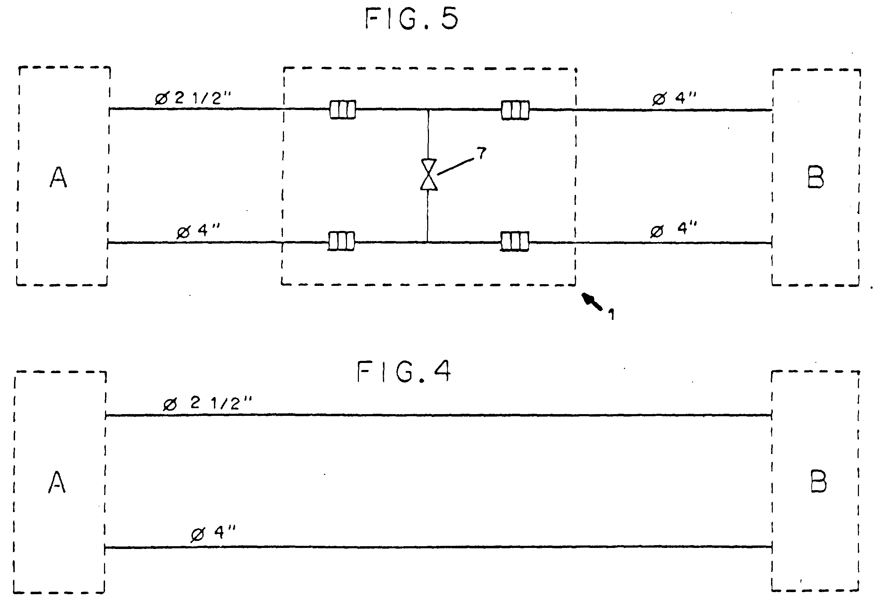

Figures 4 and 5 show how equipment 1 of the present invention can be a piping arrangement alternative in an oil flow system in relation to the flow of fluid for injection into the well, enabling the use of a pig to be visualized.

In equipment 1, shown in Figure 5, the pig is sent out through the top line, from station "B" towards station "A" (as shown by the arrow). At station "A" (for example) there is a wet Christmas tree and at station "B", for example, we have a platform or any other station on the surface. Through the bottom line, Christmas tree "A", for example, sends the oil produced to station "B" (for example, a platform).

In Figure 4, we have the conventional case in which the injection fluid is sent from station "B" to station "A" through a top line, having a diameter of for example 2½'' (about 6.35 cm) from the branching point to station "A". By contrast, the lower piping would have a diameter of 4'' (about 10 cm) throughout its entire length, to carry oil from station "A" to station "B". As shown, the branching line interconnecting the top and bottom lines and the inside diameter of the full-passage valve 7 would be 4'' (about 10 cm). This means that the pig can be sent without undergoing a major diameter restriction by compression when leaving station "B" or having to undergo a remarkable expansion from 2½'' to 4'' (from 6.35 cm to 10 cm) for its return. Throughout its passage inside the pipe, the pig would go through pipes having the same diameter, thereby increasing its efficiency of clearing the pipes.

However, it should be noted that pipe diameters quoted herein are only given as an example of certain cases encountered in practice and are for an explanatory effect; they are not restrictive of the present invention, since pipe arrangements carrying products and auxiliary fluids, as well as the tubular members of the equipment 1, can generally encompass the whole range of inside (or nominal) diameters possible, as will be readily understood by those skilled in the art.

A further advantage of the use of the equipment of the present invention is that the equipment should be placed intercalated within the line taking into account only the length over which experience has shown obstruction by undesirable products to be more frequent or more likely as a result of the conditions of the oil being produced or of environmental conditions (water temperature, depth, etc.). This lends to an economy in the installation of the equipment 1, for such installation can be made at an easily-hoistable portion or a portion requiring less labour for launching. It is obvious that this aspect does not, in critical cases, eliminate the demand for special pigs that may undergo compression on their travel or expansion when this offers some operational advantage for any other reason, although it is not immediately desirable in normal cases.

Additional, easily-perceived advantages of the present invention are for example:
a) as it is easy to intercalate the equipment 1 at any point along the pipe, without the need always to reach the well head at great depths, it is not necessary to redesign already existing equipment; all that is required is that the equipment 1 of the present invention has piping and operating valve diameters compatible with the system with which it is to be employed;
b) as a result, it becomes possible to pass a pig for any purpose (line cleaning, line calibration, checking of the working volume, etc.) in any system, including already existing installed systems; and
c) it is also possible to use the pressure of the fluid normally available in an oil well operation to drive a pig, thus eliminating the extremely high cost of additional compressed fluid facilities.

## Claims

1. A system comprising a subsea production station (8) and a surface facility (2), first and second flow lines (3 and 4) extending between them, and a device for the interconnection of said first and second flow lines to allow running of pigs from said first flow line to said second flow line, said device comprising a crossover apparatus module including:-
two curved pipeline sections (9 and 10),
a control valve (7) connected between said two curved pipeline sections (9 and 10), and
a pair of connectors (11, 12) intercalatable in respective said flow lines, said curved pipelines having their ends remote from said control valve connected to said connectors and arranged to pass a pig in said first pipeline (3) moving away from said surface facility (2) through one said connector (11) around said curved pipeline sections (9, 10) and into said second pipeline at the other said connector (12) to enter said second pipeline (4) travelling towards said surface facility;
wherein each of said connectors includes a portion which is connected to a portion of one of said flow lines (3, 4) extending towards the surface facility (2), and which branches into a first branch connected to another portion of said one flow line which extends toward the subsea production station (8), and a second branch connected to a respective one of said curved pipelines sections (9,10);
whereby upon selective actuation of said control valve to an open position a pig can be launched from the surface facility along said first flow line, passed through said crossover apparatus, and returned through said second flow line while cleaning said second flow line and pushing debris back to said surface facility (2).

2. A method of pigging a system according to claim 1, such method comprising :-
opening said control valve (7), and
passing a pig along a portion of said first pipeline (3) in a direction away from said surface facility (2) and through the two curved pipeline sections (9, 10) and the intervening open control valve (7) therebetween, to return the pig to the second pipeline (4) to travel back to said surface facility.

3. A method according to claim 2, wherein the normal pressure of the product fluids can be used to push the pig back to a platform serving as said surface facility.

4. A method according to claim 3, wherein the product fluids are oil and/or natural gas.

5. A method according to any one of claims 2 to 4, and including the step of closing said control valve (7) and restoring normal production flow along one of said pipelines (3, 4).

## Patentansprüche

1. Ein System, aufweisend eine Unterwasser- bzw. Produktions-Förderstation (8) und eine Überwassereinrichtung (2), erste und zweite Durchflußleitungen bzw. -rohre (3 und 4), die sich zwischen ihnen erstrecken, und eine Vorrichtung zum Verbinden der ersten und der zweiten Durchflußleitung bzw. des Durchflußrohres, um das Durchfahren von Rohrmolchen von der ersten Durchflußleitung zu der zweiten Durchflußleitung zu ermöglichen, wobei die Vorrichtung ein Umleitmechanismusmodul aufweist, welches umfaßt:
zwei gebogene bzw. gekrümmte Pipelineabschnitte (9 und 10),
ein Steuerventil (7), welches zwischen den beiden gebogenen bzw. gekrümmten Pipelineabschnitten (9 und 10) angeschlossen ist, und
ein Paar von Verbindern (11, 12), die zwischen den beiden jeweiligen Durchflußleitungen eingeschoben werden können, wobei die sich von dem Steuerventil entfernt befindenden Enden der gebogenen bzw. gekrümmten Pipelines an die Verbinder angeschlossen und derart angeordnet sind, daß ein Rohrmolch in der ersten Pipeline (3) in Richtung weg von der Überwassereinrichtung (2) durch das eine Verbinder (11), durch die gebogenen bzw. gekrümmten Pipelineabschnitte (9, 10) und an dem anderen Verbinder (12) in die zweite Pipeline fahren kann, um in die zweite Pipeline (4) hinein in Richtung der Überwassereinrichtung zu fahren;
wobei jedes der Verbinder einen Bereich einschließt, der mit einem Bereich einer der Durchflußleitungen (3, 4), die sich in Richtung der Überwassereinrichtung (2) erstrecken, verbunden ist und sich in einen ersten Zweig, der mit einem anderen Bereich der einen Durchflußleitung verbunden ist, welche sich in Richtung der Unterwasser-Förderstation (8) erstreckt, und in einen zweiten Zweig verzweigt, der jeweils an einen gebogenen bzw. gekrümmten Pipelineabschnitt (9, 10) angeschlossen ist;
wobei nach selektiver Schaltung des Steuerventils in eine geöffnete Stellung ein Rohrmolch von der Überwassereinrichtung entlang der ersten Durchflußleitung gestartet, durch den Umleitmechanismus geführt und durch die zweite Durchflußleitung zurückgebracht werden kann, während er die zweite Durchflußleitung reinigt und Verunreinigungen zurück zur Überwassereinrichtung (2) schiebt.

2. Verfahren zum Hindurchführen von Rohrmolchen durch ein System nach Anspruch 1, welches folgende Schritte aufweist:
Öffnen des Steuerventils (7), und
Hindurchführen eines Rohrmolchs entlang eines Abschnitts der ersten Pipeline (3) in eine Richtung weg von der Überwassereinrichtung (2) durch die beiden gebogenen bzw. gekrümmten Pipelineabschnitte (9, 10) und das zwischen diesen eingefügte offene Steuerventil (7), um den Rohrmolch zu der zweiten Pipeline (4) zurückzuführen, damit er zur Überwassereinrichtung zurückfährt.

3. Verfahren nach Anspruch 2, bei dem der normale Druck der geförderten Fluide verwendet werden kann, um den Rohrmolch zu einer Plattform, die als die Überwassereinrichtung dient, zurückzuschieben.

4. Verfahren nach Anspruch 3, bei dem die geförderten Fluide Öl und/oder Erdgas sind.

5. Verfahren nach einem der Ansprüche 2 bis 4 einschließend den Schritt des Schließens des Steuerventils (7) und des Wiederherstellens des normalen Förderflusses entlang einer der Pipelines (3, 4).

## Revendications

1. Ensemble comprenant une station (8) de production sous-marine et une installation (2) de surface, des première et seconde (3 et 4) lignes d'écoulement (ou pipe-lines) s'étendant entre celles-ci, et un dispositif destiné à raccorder desdites première et seconde lignes d'écoulement pour permettre le passage de racleurs depuis ladite première ligne d'écoulement vers ladite seconde ligne d'écoulement, ledit dispositif comprenant un module formant dispositif de croisement comportant:
deux sections (9 et 10) de pipe-line courbes,
une vanne de commande (7) raccordée entre lesdites deux sections de pipe-line courbes (9 et 10),
et une paire de raccords (11; 12) pouvant être intercalée dans lesdites lignes d'écoulement respectives, les extrémités desdits pipe-lines courbes distantes de ladite vanne de commande étant raccordées auxdits raccords et agencées de manière à laisser passer un racleur par ledit premier (3) pipe-line, se déplacer à l'opposé de ladite installation de surface (2), passer à travers le premier (11) desdits raccords autour desdites sections (9, 10) de pipe-line courbes et dans ledit second pipe-line, à l'autre (12) desdits raccords, afin de rentrer dans ledit second pipe-line (4) en circulant vers ladite installation de surface;
dans lequel chacun desdits raccords comprend une partie qui est raccordée à une partie de l'une desdites lignes d'écoulement (3, 4) s'étendant vers l'installation de surface (2), et qui est reliée à une première dérivation raccordée à une autre partie de ladite première ligne d'écoulement qui s'étend vers la station (8) de production sous-marine, et une seconde dérivation raccordée à l'une respective desdites sections de pipe-line courbes (9, 10);
de telle sorte que, lors de l'activation sélective de ladite vanne de commande vers une position ouverte, un racleur peut être lancé depuis l'installation de surface le long de ladite première ligne d'écoulement, passer à travers ledit dispositif de croisement, et revenir à travers ladite seconde ligne d'écoulement tout en nettoyant ladite seconde ligne d'écoulement et en repoussant les débris vers ladite installation de surface (2).

2. Procédé de raclage d'un ensemble selon la revendication 1, un tel procédé comprenant:
l'ouverture de ladite vanne de commande (7), et
le passage d'un racleur le long d'une partie dudit premier pipe-line (3) dans un sens s'éloignant de ladite installation de surface (2) et à travers les deux sections de pipe-line courbes (9, 10) et la vanne de commande (7) ouverte intervenant entre celles-ci, afin d'envoyer le racleur vers le second pipe-line (4) pour le faire revenir vers ladite installation de surface.

3. Procédé selon la revendication 2, dans lequel la pression normale des fluides produits peut être utilisée pour repousser le racleur vers une plate-forme utilisée comme ladite installation de surface.

4. Procédé selon la revendication 3, dans lequel les fluides produits sont le pétrole et/ou le gaz naturel.

5. Procédé selon l'une quelconque des revendications 2 à 4, et comprenant l'étape de fermeture de ladite vanne de commande (7) et de rétablissement de l'écoulement normal de production à travers l'un desdits pipe-lines (3, 4).
